# DEMANDE DE BREVET EUROPEEN

(11) **EP 0 524 872 A1**
(43) Date de publication de la demande: **27.01.1993**
(21) Numéro de dépôt: 92402099.3
(22) Date de dépôt: 21.07.1992
(51) Int. Cl.: B64B 1/58

(54) **Montgolfière**

(30) Priorité: 24.07.1991 FR 9109383
(71) Demandeur: Domen, Jean-Paul, F-92110 Clichy (FR)
(72) Inventeur: Domen, Jean-Paul, F-92110 Clichy (FR)

(57) **Abrégé**

Cette mongolfière comporte deux moyens de chauffage: condensation exothermique de vapeur d'eau et effet de serre. Elle comporte un ballon (10) pourvu, dans sa partie supérieure (12), d'une paroi à la fois transparente et absorbante et, à l'intérieur, d'un écran (44) absorbant le rayonnement solaire. L'écran (44) peut être disposé de manière à pouvoir capter au mieux ce rayonnement. En outre, l'air de gonflage du ballon (10) est suffisamment chaud et humide, pour qu'une condensation exothermique de la vapeur d'eau qu'il contient, puisse, au moins à partir d'une certaine altitude, être suffisante pour augmenter la poussée d'Archimède et accélérer la vitesse de montée du ballon.

Applications:
Jouet nouveau (⌀ = 2m)
Montgolfière de loisir (⌀ = 20m)
Montgolfière-treuil (⌀ = 100 m).

## Description

L'invention se rapporte aux montgolfières, c'est-à-dire à des ballons ouverts à la base et gonflés à l'air chaud.

Une montgolfière tient en l'air par la poussée d'Archimède, son poids total étant inférieur au poids de l'air extérieur déplacé. La poussée est égale au produit du volume du ballon par l'accélération de la pesanteur et par la différence des masses volumiques interne et externe au ballon, due à la différence des températures de l'air à l'intérieur et à l'extérieur du ballon. Au niveau de l'ouverture, l'air à l'intérieur du ballon est en équilibre de pression avec l'air extérieur, aussi longtemps que la vitesse ascensionnelle du ballon est nulle. Au sommet du ballon, l'air intérieur est plus chaud qu'à la base et il est soumis à une pression supérieure à la pression de l'air extérieur. Pour que se maintiennent la surpression qui gonfle le ballon et la poussée d'Archimède qui le fait monter, il faut faire un apport constant ou périodique de chaleur, afin de compenser le refroidissement dû à la détente adiabatique de l'air du ballon au cours de son ascension et les pertes par conduction thermique à travers sa paroi. Pour réaliser cet apport de chaleur, il est usuel de brûler du gaz propane à l'intérieur du ballon d'une manière discontinue. A titre d'exemple, pour maintenir en l'air, pendant une heure, une montgolfière de vingt mètres de diamètre pesant deux cent cinquante kilogrammes, il est nécessaire de brûler quatorze kilogrammes de propane, c'est-à-dire d'apporter au ballon cent soixante kilowatts en moyenne.

Une manière de pallier cette nécessité a brièvement été décrite dans un article du journal français Le Figaro daté du 19/11/91, concernant la campagne européenne d'étude de l'ozone dans l'Arctique. Des montgolfières présentant une partie inférieure transparente et une partie supérieure aluminisée, initialement gonflées à l'hélium, évoluent à haute altitude entre deux niveaux extrêmes. Cela, grâce au rayonnement solaire pendant le jour et au rayonnement infrarouge de la terre pendant la nuit; le mélange air-hélium, qui gonfle ces ballons dès la première descente, reste toujours suffisamment chaud pour leur permettre de se comporter en ludions, pendant une durée relativement longue.

Un premier objet de l'invention est un procédé nouveau pour gonfler une montgolfière, afin de lui permettre de s'élever jusqu'à une altitude élevée, sans nécessiter de nouvel apport de chaleur extérieur.

Un deuxième objet de l'invention est une montgolfière perfectionnée, partiellement gonflée selon le procédé en question, qui puisse monter très rapidement jusqu'à une première altitude sans apport d'énergie extérieure puis modifier automatiquement son comportement et continuer à monter moins rapidement que précédemment jusqu'à une deuxième altitude, sans pour autant requérir d'apport d'énergie extérieur.

Un troisième objet de l'invention est une montgolfière perfectionnée, susceptible de continuer à monter jusqu'à une troisième altitude très élevée, lorsque le moyen de gonflage, mis en oeuvre par le procédé en question, a épuisé ses effets.

Selon l'invention, un procédé nouveau pour gonfler une montgolfière est caractérisé en ce qu'il consiste à utiliser à cet effet, de l'air chaud suffisamment humide pour qu'une condensation de la vapeur d'eau contenue dans cet air puisse se produire au cours de l'ascension de cette montgolfière, au moins à partir d'une altitude donnée.

Une montgolfière ainsi gonflée monte rapidement en altitude, sous l'effet d'une poussée d'Archimède qui augmente avec la vitesse ascensionnelle du ballon. Cela, parce que la montée du ballon provoque une baisse de pression au niveau de l'ouverture, ce qui engendre la détente du mélange air-vapeur, la condensation exothermique d'une partie de cette vapeur et finalement un écart de température croissant entre l'intérieur et l'extérieur du ballon et donc, au moins dans un premier temps, une augmentation de la poussée d'Archimède et de la vitesse de montée. Le tout s'arrêterait instantanément si la vitesse de montée du ballon s'annulait. Ce phénomène cumulatif s'apparente aux conditions d'instabilité météorologique qui provoquent orages et cyclones. Des puissances considérables sont ainsi mises en jeu qui atteignent 50 MW pour une montgolfière de cent mètres de diamètre.

L'atmosphère standard est définie entre le niveau de la mer et la tropopause (plateau thermique de 216,5 K commençant à une altitude de 11.000 mètres), par une température au sol Tₑ de 288 Kelvins, une pression au sol P de 101.325 Pascals, et un gradient vertical de température dTₑ/dz de -6,5 K/km. Par ailleurs, la variation relative de pression en fonction de l'altitude dP/P.dz = -0,12/km (soit -12.200 Pa/km au niveau de la mer et -2.500 Pa/km à la tropopause), ce qui entraîne une diminution de la température du point de rosée dTₛ/dz en fonction de l'altitude, d'environ -2 K/km. Pour ce qui concerne la variation de la pression de saturation en eau, elle suit une loi indépendante de la pression ambiante et elle passe de 100 à 300 Pa/K pour une température intérieure Tᵢ variant de 288 K à 310 K. Par ailleurs, à partir de l'équation des gaz parfaits et de l'évolution de la pression avec l'altitude, on montre que la détente adiabatique de l'air intérieur d'une montgolfière, provoque une diminution de la température Tᵢ de cet air de 9,77.(Tᵢ/Tₑ) K/km.

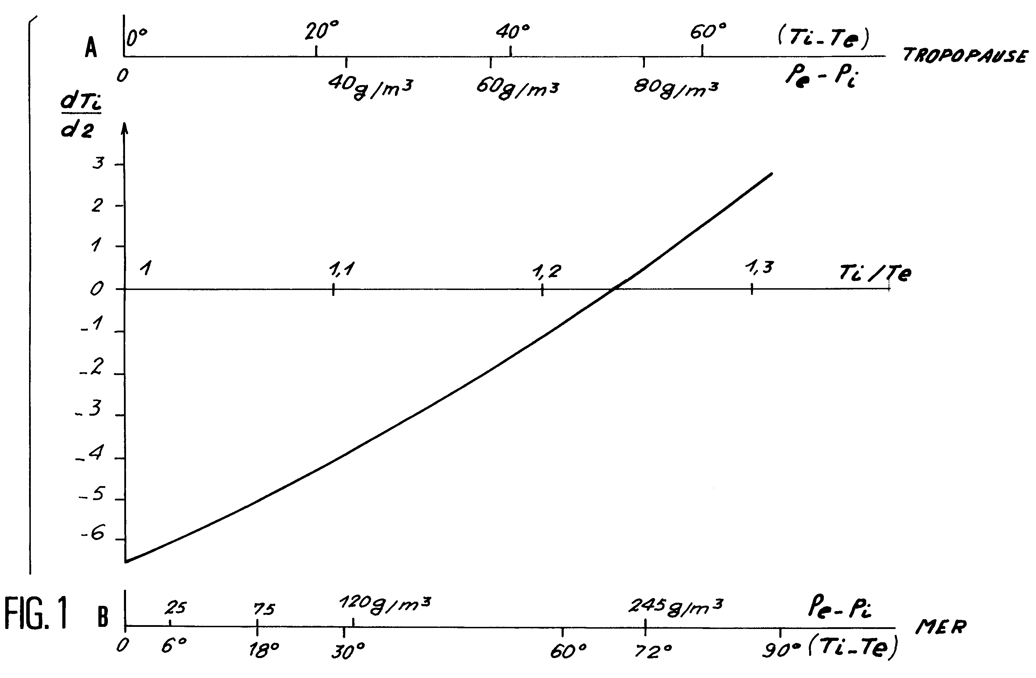

En combinant les équations caractéristiques d'une montgolfière (équations d'équilibre dans l'air et équations d'état de l'air à l'intérieur et à l'extérieur), on montre que la variation dTᵢ de la température intérieure Tᵢ, nécessaire pour maintenir en l'air à une altitude donnée, une charge constante donnée, dans l'atmosphère standard décrite plus haut, en fonction de la variation d'altitude dz (en km) est une fonction croissante dTᵢ/dz = 27,7.(Tᵢ/Tₑ)² - 34,2.(Tᵢ/Tₑ), représentée à la figure 1. A partir de l'équation d'équilibre visée plus haut, on peut calculer les écarts de températures (Tᵢ-Tₑ) et de masses volumiques (ρₑ-ρᵢ), au niveau de la mer et à celui de la tropopause, qui correspondent aux valeurs maximales des rapports (Tᵢ/Tₑ) à mettre en oeuvre au sol et en altitude, pour pouvoir décoller et ensuite se maintenir en l'air. Ces écarts sont représentés par deux lignes A et B à double graduation, respectivement placées au-dessous et au-dessus de la courbe de la figure 1. Cette superposition de courbes permet d'expliquer la totalité des phénomènes thermodynamiques qui prennent naissance au cours de la montée d'une montgolfière gonflée selon le procédé de l'invention.

Tout d'abord, on voit qu'en atmosphère standard, une montgolfière peut s'élever alors que sa température interne diminue avec l'altitude. Cela est vrai tant qu'elle se trouve sous la tropopause et à la seule condition que le rapport Tᵢ/Tₑ entre les températures absolues, interne et externe à la montgolfière, reste inférieur à 1,234 en atmosphère standard. La valeur maximale de ce refroidissement est de 6,5 K/km (le gradient dTₑ/dz) pour Tᵢ=Tₑ et elle correspond à une montgolfière fictive dont la masse totale est nulle.

Par conséquent, si l'on veut qu'une montgolfière puisse être chauffée par la condensation exothermique de l'eau initialement contenue sous forme de vapeur dans l'air chaud qu'elle renferme, et cela jusqu'à la tropopause, il faut qu'à l'altitude de cette dernière, l'écart de température minimal, nécessaire pour la maintenir en l'air, n'excède pas 51 K (soit 0,234 fois 216,5 K). Ce qui correspond, sur la ligne B de la figure, à un écart maximal de masse volumique de 70 gr/m³. En reportant ce terme sur la ligne A de la figure, on voit que cet écart maximal final de masse volumique correspond à un valeur maximale initiale de 1,07 pour le rapport Tᵢ/Tₑ nécessaire au décollage, si l'on veut atteindre la tropopause sans apport extérieur de chaleur.

Par ailleurs, on a vu plus haut que le gradient vertical de température du point de rosée est de -2 K/km. Si l'on reporte cette valeur sur la figure 1, elle constitue une borne qui sépare le domaine des montgolfières usuelles de celui des montgolfières selon l'invention. Cette valeur de seuil correspond à un rapport Tᵢ/Tₑ = 1,17. Les montgolfières usuelles, généralement chargées à 250 gr/m³ et chauffées au propane, fonctionnent avec un écart de température (Tᵢ-Tₑ) supérieur à 72 K au niveau de la mer. Par la suite, un rapport croissant Tᵢ/Tₑ (débutant à 1,26) devra être assuré pour réaliser une montée continue du ballon. Compte-tenu du poids des bouteilles de propane qu'il faut emporter, cette obligation limite assez rapidement l'altitude maximale habituelle des montgolfières de type courant et, par ailleurs, explique pourquoi une telle montgolfière ne peut en aucun cas provoquer de condensation exothermique, d'autant plus que l'air intérieur est loin d'être saturé en eau.

Au contraire, les montgolfières selon l'invention fonctionnent grâce à la récupération de la chaleur latente de condensation de la vapeur d'eau qu'elles contiennent, dès lors que, à partir d'une altitude donnée, le refroidissement de l'air intérieur est, d'une part, nettement supérieur à la diminution de la température du point de rosée (2 K/km) et nettement inférieur au refroidissement de l'air extérieur (6,5 K/km). Ces valeurs, reportées sur la figure 1, définissent les conditions de fonctionnement d'une montgolfière selon l'invention. Lorsque le rapport Tᵢ/Tₑ se rapproche de sa limite inférieure, la charge utile diminue mais le phénomène exothermique de condensation augmente en même temps que la vitesse de montée et l'altitude maximale susceptible d'être atteinte. Lorsque ce rapport Tᵢ/Tₑ se rapproche de sa limite supérieure, la charge possible par unité de volume augmente jusqu'à un plafond de 178 gr/m³, mais l'intensité du phénomène exothermique de condensation diminue, de même que la vitesse de montée et l'altitude maximale. En pratique, ces différents cas de figures sont explorés tout au long de la montée de la montgolfière. Le phénomène cumulatif décrit plus haut démarre à partir d'une altitude donnée, déterminée par les conditions au décollage qui sont la charge par unité de volume, les températures interne et externe et la pression relative en vapeur d'eau saturante. Le phénomène se termine au moment où la pression relative de saturation en eau devient insuffisante pour que l'apport de chaleur dû à une condensation de vapeur d'eau, consécutive à une variation donnée de température, compense les pertes thermiques de la montgolfière (détente adiabatique et pertes à la paroi). Ensuite, l'ascension se poursuit quelque peu, d'une part, sous l'effet de la vitesse acquise et, d'autre part, sous l'effet de la condensation modérée de vapeur d'eau qui continue jusqu'à ce que l'air intérieur ne soit plus saturé en vapeur d'eau. Après avoir ainsi atteint son plafond sans apport de chaleur extérieur, la montgolfière commence sa descente. Pendant toute la durée de la détente pseudo-adiabatique du mélange saturé, l'eau de condensation tombe en pluie, brouillard, neige ou glace, suivant les conditions de température, pression et saturation en eau de l'air extérieur.

En pratique,la quantité de chaleur produite par la condensation de la vapeur d'eau varie en fonction de la température à laquelle le phénomène apparaît. A titre d'exemple, à 300 K , la condensation d'un gramme de vapeur d'eau produit 2.400 joules, ce qui augmente de 2,4 K la température d'un kilogramme d'air. Le phénomène de condensation est directement lié à dPₛ/dTᵢ, la variation, en fonction de la température, de la pression de vapeur d'eau saturante dans la montgolfière.

Pour produire une détente exothermique efficace de l'air chaud saturé en vapeur d'eau d'une montgolfière gonflée selon l'invention, il faut que l'écart entre la variation de sa température finale et celle consécutive à la seule détente adiabatique soit nettement supérieur (le double, par exemple) à l'écart entre la diminution de la température du point de rosée et celle de la température finale. Cette situation apparaît au niveau de la mer, pour un air à 294 K saturé en vapeur d'eau auquel correspond une variation dPₛ/dTᵢ = 140 Pa/K. Au niveau de la mer, cette température intérieure de 294 K correspond elle-même à une valeur dTᵢ/dz de 5 K/km et à une charge maximale par unité de volume de 70 gr/m³, pour une température Tₑ de l'ordre de 276 K. Ce sont les conditions minimales à remplir pour pouvoir compenser localement la perte de température due à la détente adiabatique consécutive à une montée élémentaire dz, par l'apport calorique de la condensation de vapeur d'eau pendant cette montée. Bien entendu, si l'on veut que le phénomène se poursuive jusqu'à la tropopause, il sera nécessaire de disposer d'un air nettement plus chaud, sous réserve toutefois que la température intérieure Tᵢ, nécessaire au décollage, présente avec la température extérieure Tₑ, un rapport Tᵢ/Tₑ < 1,17. Si ce rapport est trop proche de ce maximum, c'est-à-dire si la charge par unité de volume est importante, l'altitude maximale que la montgolfière pourra atteindre sans apport de chaleur extérieur, décroît rapidement. A titre d'exemple, le plafond est seulement d'environ 5.000 m pour une charge par unité de volume de 150 gr/m³, en atmosphère standard.

Selon une deuxième caractéristique de l'invention, d'une part, la montgolfière au décollage est seulement partiellement gonflée et la température de l'air chaud saturé en vapeur d'eau qu'elle contient est d'autant plus grande que la montgolfière est moins gonflée et que la charge par unité de volume au décollage est importante et, d'autre part, un obturateur est installé d'une manière relativement étanche sur l'ouverture de la montgolfière ainsi gonflée, les moyens de fixation de cet obturateur étant adaptés à permettre son arrachement automatique lorsque la pression à l'intérieur devient un peu supérieure à la pression à l'extérieur.

Grâce à ces dispositions, une montgolfière ainsi gonflée en partie et fermée pour un temps, (par exemple, gonflée à moitié avec un air saturé en vapeur d'eau à 306 K), monte beaucoup plus rapidement qu'une montgolfière ouverte, complètement gonflée selon le procédé de l'invention, produisant la même poussée initiale. En effet, avec une montgolfière ainsi gonflée et fermée, une condensation exothermique de la vapeur d'eau se produit avec une efficacité bien meilleure au cours de la montée. Le phénomène se déroule non plus à volume de ballon constant et à masse de gaz décroissante, comme dans le cas d'une montgolfière ouverte, mais à masse de gaz sensiblement constante, puisque le volume d'un ballon fermé, partiellement gonflé, augmente jusqu'à un maximum au fur et à mesure de sa montée en altitude. Il s'en suit que les lois régissant le phénomène de maintien en l'air d'un tel ballon fermé, sont différentes de celles concernant un ballon ouvert et deviennent Tᵢ/Tₑ = Cte et dTᵢ/dz = -6,5.Tᵢ/Tₑ K/km. A titre d'exemple, pour un rapport Tᵢ/Tₑ = 1,10, la charge maximale par unité de volume au décollage devient 125 gr/m³ et le rapport dTᵢ/dz = -7,5 K/km. Le gradient vertical, ainsi autorisé pour Tᵢ, est plus important que dans le cas d'une montgolfière standard ouverte, parce que toute l'énergie de condensation de la vapeur d'eau est dégagée à l'intérieur du ballon fermé et que l'efficacité du phénomène est alors beaucoup augmentée. Le processus s'arrête dès que le volume du ballon atteint son maximum et que la pression intérieure augmente jusqu'à nettement dépasser la pression extérieure. Cela a pour effet de provoquer un brusque décrochage de la fixation élastique de l'obturateur et de placer le ballon dans les conditions de montée d'une montgolfière standard ouverte. A cet instant, cette montgolfière est à la fois, gonflée avec de l'air particulièrement chaud saturé en vapeur d'eau, déjà placée à une altitude relativement élevée et, de plus, animée d'une grande vitesse de montée. Cet ensemble de conditions est particulièrement favorable pour permettre à la montgolfière de monter très haut, avant d'avoir épuisé toute l'énergie latente de condensation contenue dans la vapeur d'eau emportée.

Selon un troisième aspect de l'invention, une montgolfière, du genre comportant une partie de paroi transparente et des moyens de chauffage exploitant le rayonnement solaire, est caractérisée en ce que, d'une part, au moins la partie supérieure de la paroi du ballon est réalisée au moyen d'une pellicule plastique à la fois transparente et absorbante vis-à-vis du rayonnement solaire, avec un coefficient d'absorption d'environ vingt pour cent et, d'autre part, un écran absorbant au mieux le rayonnement solaire est disposé à l'intérieur.

Grâce à ces dispositions, le rayonnement solaire, absorbé par la paroi partiellement transparente de la montgolfière, maintient la température de cette paroi à une valeur suffisante pour empêcher une condensation de vapeur d'eau sur cette paroi qui réduirait considérablement le rayonnement solaire frappant l'écran intérieur au ballon et augmenterait les pertes par conduction à la paroi. Le rayonnement ainsi absorbé par l'écran est un apport extérieur d'énergie qui s'ajoute à la chaleur produite par la condensation de la vapeur d'eau puis qui se substitue à elle lorsque le phénomène qui l'engendre n'apparaît plus. A cet égard, on notera que la valeur maximale de la chaleur produite par condensation de vapeur d'eau dans une montgolfière de grande taille est près de quinze fois supérieure à celle fournie par l'absorption du rayonnement solaire. A un moment donné de l'ascension de la montgolfière, le rayonnement solaire ainsi absorbé peut être suffisant pour compenser les pertes thermiques, par détente adiabatique et par conduction de la paroi du ballon, lorsque la condensation exothermique de la vapeur d'eau de l'air du ballon a épuisé ses effets. Dans ce cas, la poussée d'Archimède peut se stabiliser jusqu'à ne compenser que le poids du ballon qui alors demeure à une altitude constante. Si le rayonnement solaire est suffisant pour que la poussée d'Archimède demeure supérieure au poids du ballon, celui-ci continue à monter. Dans ce cas, sa température moyenne interne continue à baisser, pour autant que l'on soit sous la tropopause et que le rapport Tᵢ/Tₑ soit inférieur à 1,234. Toutefois, pour conserver une vitesse ascensionnelle au ballon, la température intérieure doit constamment présenter un écart croissant avec la température extérieure, comme cela est indiqué à la figure 1. Cet impératif est d'autant plus contraignant que le volume du ballon est grand, puisque les échanges thermiques avec le soleil et avec l'air extérieur sont proportionnels aux surfaces concernées alors que la masse d'air à chauffer est, quant à elle, proportionnelle au volume du ballon.

L'écran intérieur d'une montgolfière selon l'invention, constitue une source d'énergie dont le maximum, compte-tenu du coefficient d'absorption de la paroi, est de 0,8 kW par mètre carré de surface efficace. Avec une telle source de chaleur, l'air intérieur du ballon est chauffé par effet de serre. En effet, l'écran se comporte comme un corps noir plus ou moins parfait qui, d'une part, absorbe le rayonnement solaire qui lui parvient à travers la paroi partiellement transparente du ballon et, d'autre part, dissipe par convection l'énergie ainsi transformée. Avec un ballon de vingt mètres de diamètre, on dispose d'un écran absorbant dont la surface efficace peut atteindre 314 m², c'est-dire peut engendrer 250 kW, ce qui est très supérieur à ce qu'il est nécessaire d'apporter comme énergie pour tenir en l'air une telle montgolfière.

Avec les deux types d'énergie exploités par une montgolfière perfectionnée et gonflée selon les trois aspects complémentaires de l'invention, le coût d'une ascension avec une telle montgolfière est particulièrement faible. L'altitude maximale susceptible d'être atteinte et la vitesse de la montée sont principalement déterminées par les conditions dans lesquelles une condensation de vapeur d'eau peut se produire. Quant à la durée du vol, elle dépend principalement de l'intensité et de la durée de l'ensoleillement du lieu. Dans ces conditions, avec un bon ensoleillement, une montgolfière ouverte, de 100 m de diamètre, pourvue d'une paroi transparente et d'un écran intérieur selon l'invention et, au départ, remplie d'air chaud à 300 K, qui, à un moment donné plus tard, devient saturé en vapeur d'eau à 294 K, peut emporter une une charge de 25 tonnes (soit 50 gr/m³) jusqu'à une altitude de 20.000 mètres. Au cours de cette ascension, la tropopause est atteinte en 25 minutes, sous l'effet principal de la condensation exothermique de la vapeur d'eau emportée (22 tonnes) et l'altitude finale, en trois heures environ, sous l'effet complémentaire du rayonnement solaire absorbé par l'écran.

Si cette montgolfière avait été gonflée à moitié avec un air saturé en vapeur d'eau à au moins 306 K et son ouverture, fermée au moyen d'un obturateur décrochable selon l'invention, la charge aurait pu augmenter jusqu'à 50 tonnes, la durée de la montée jusqu'à la tropopause, tomber à environ 15 minutes et l'altitude finale, devenir très supérieure à l'altitude maximale précédente.

Les caractéristiques et avantages de l'invention apparaîtront d'une manière plus précise à la suite de la description qui va suivre, faite à titre d'exemple non limitatif, en référence aux dessins annexés dans lesquels:
- la figure 1 représente les courbes commentées plus haut;
- la figure 2 représente une coupe axiale d'une montgolfière perfectionnée selon l'invention.

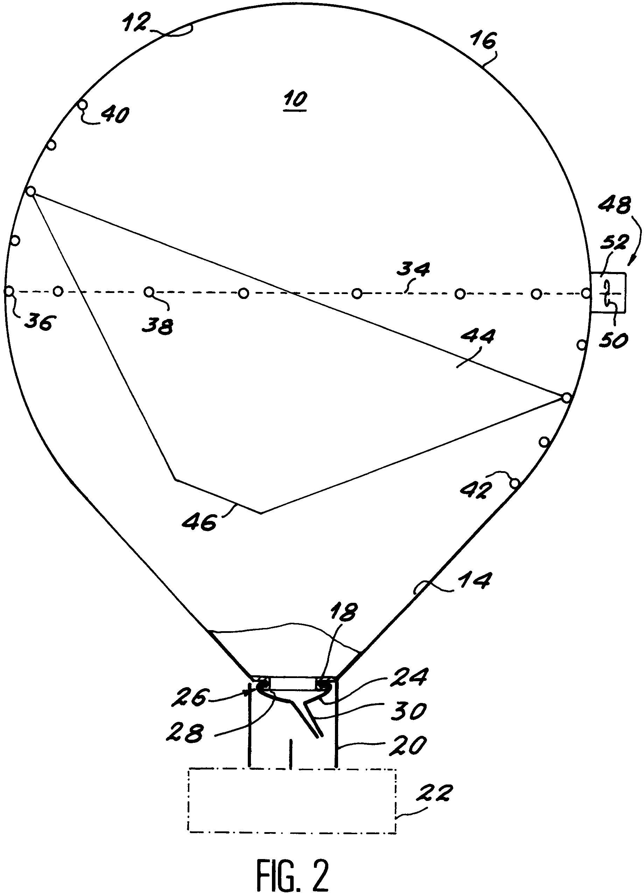

Selon la figure 2, une montgolfière selon l'invention comprend un ballon 10 ayant une partie supérieure 12, sensiblement sphérique, et une partie inférieure 14, sensiblement tronconique, ouverte vers le bas, avec un diamètre d'ouverture mesurant de dix à quinze pour cent de celui du ballon. La paroi 16 du ballon 10 est à la fois étanche, relativement transparente, pourvue d'un coefficient d'absorption du rayonnement solaire, d'environ vingt pour cent, et hautement résistante à la traction. A cet effet, elle sera, par exemple, constituée, par un assemblage de lés de pellicule de polyéthylène, de couleur brune et de vingt microns d'épaisseur, soudés le long de cordons à haute résistance (carbone ou kevlar). Dans un tel cas, le poids d'un ballon de vingt mètres de diamètre, sera d'environ trente cinq kilogrammes. La loi de variation de la résistance au déchirement d'une telle pellicule plastique soumise à une température relativement élevée, détermine la valeur maximale de la température de l'air saturé en vapeur d'eau utilisé pour gonfler la montgolfière.

Les bords de l'ouverture du ballon 10 sont solidement fixés à un collier circulaire 18 auquel sont attachés, d'une part, des suspentes 20 soutenant une charge 22 et, d'autre part, un obturateur décrochable 24, réalisé en tissu imperméable et pourvu d'un bord élastique 26. Le collier 18 comporte un rebord extérieur 28 sur lequel est engagé le bord élastique 26 de l'obturateur 24. L'obturateur 24 comporte en son centre une ouverture circulaire raccordée à un manchon 30 relativement long, pourvu d'un orifice de sortie étroit. Cette ouverture centrale et ce manchon permettent une évacuation continue de l'eau de condensation sans autoriser celle de l'air intérieur. De la sorte, un décrochage prématuré de l'obturateur 24 ne peut se produire sous le poids de cette eau. Le diamètre du manchon 30 mesure environ dix pour cent du diamètre de l'obturateur 24. La force de décrochage du bord élastique de l'obturateur, engagé sur le rebord du collier 18, correspond, par exemple, à un excès de pression intérieure d'environ 50 Pascals. Le diamètre du collier 18 a été choisi suffisamment grand pour que, après décrochage de l'obturateur 24, l'air intérieur puisse s'échapper avec un écart de pression faible, par exemple, inférieur à 20 Pascals.

A l'intérieur du ballon 10, à intervalles réguliers, le long du grand cercle horizontal 34 de la partie sphérique 12 et le long de quatre autres grands cercles séparés les uns des autres par un angle de dix degrés environ, sont fixées des boucles telles que 36-38-40-42. A ces boucles, sont accrochés des mousquetons (non représentés) solidaires de la périphérie d'un écran 44 à contour sensiblement circulaire, réalisé en un matériau noir mince, une feuille de plastique ou d'aluminium anodisé par exemple. L'écran 44 comporte, en son centre, une ouverture 46, de diamètre moyen comparable à celui de l'ouverture du ballon. Cette ouverture 46 permet une bonne circulation de l'air à l'intérieur du ballon. Sous son propre poids, l'écran 44 prend la forme d'un tronc de cône plus ou moins déformé, dirigé vers le bas.

Lorsque le ballon 10 doit être utilisé avec un écran 44 soutenu par des boucles 40-42 disposées suivant un grand cercle plus ou moins incliné sur l'horizon parce que, à l'époque concernée, le soleil monte peu ou, au contraire, beaucoup dans le ciel du lieu, il est alors nécessaire d'orienter l'axe de l'écran 44 au même azimut que le soleil, afin d'avoir la meilleure surface efficace d'écran. A cet effet, un dispositif d'orientation 48 comprenant une hélice 50 à axe orthoradial, entraînée par un moteur électrique 52, est fixé à l'extérieur du ballon, au niveau de l'équateur. Ce moteur 52 peut être alimenté dans un sens ou dans l'autre, par une batterie ou par des panneaux solaires. Pour un ballon de vingt mètres de diamètre, une puissance de dix watts électriques et une hélice de cinquante centimètres de diamètre sont amplement suffisants pour correctement orienter l'écran en quelques minutes et/ou pour constamment lui faire suivre le mouvement du soleil.

Une montgolfière selon l'invention, de vingt mètres de diamètre, remplie au décollage d'un air suffisamment chaud et humide pour pouvoir présenter, à un moment donné, un point de rosée à une température d'au moins 294 K, peut théoriquement emporter une charge de 250 kg (soit 60 gr/m³) à toute altitude compatible avec la résistance humaine en l'absence de réserve d'oxygène et cela, pendant toute la durée d'ensoleillement du lieu. Elle constitue donc une parfaite montgolfière de loisir. Après avoir gonflé le ballon d'une telle montgolfière, à l'aide des moyens habituels (ventilateur), on le préchauffera au moyen d'un brûleur à propane fixe, dans la flamme duquel on injectera de l'eau pulvérisée. L'altitude d'une telle montgolfière est pilotable de deux façons. La première consiste à la faire tourner sur son axe, à l'aide de l'hélice d'orientation. De la sorte, on peut placer l'écran dans un état de surface efficace minimale, insuffisante pour maintenir l'écart de température nécessaire à la production d'une poussée équilibrant le poids de l'ensemble. La seconde manière consiste à utiliser des moyens conventionnels, par exemple l'ouverture d'une soupape disposée au sommet du ballon.

On notera que pendant toute la descente d'une montgolfière, l'air intérieur se comprime pour rester en équilibre de pression avec l'air extérieur. De ce fait, comme en montée, la température intérieure augmente plus que celle de l'extérieur. Ce qui a pour effet de stabiliser la vitesse de descente.

Une montgolfière pourvue d'un écran fixe selon l'invention, de deux mètres de diamètre et d'un poids total de deux cents grammes, peut avec un bon ensoleillement, s'élever à plusieurs centaines de mètres. Reliée au sol par un fil, elle constitue un jouet nouveau intéressant que l'on peut gonfler assez rapidement au moyen d'un séchoir à cheveux portatif, de préférence raccordé au ballon à travers un manchon en tissu maintenu humide. On notera ici que, pour cette application particulière, les trois aspects complémentaires de l'invention peuvent ne pas être associés.

Une montgolfière selon l'invention de cent mètres de diamètre peut être gonflée assez rapidement au moyen d'un réacteur à double flux, associé à une chambre adaptée à humidifier et refroidir le jet de gaz chauds produits, au moyen d'un rideau de jets d'eau. Dans des conditions favorables, une telle montgolfière, perfectionnée et gonflée selon l'invention, peut emporter une charge pesant jusqu'à 50 tonnes à une altitude de trente kilomètres (cas d'une montgolfière gonflée à moitié, remplie d'air saturé en vapeur d'eau à au moins 310 K et fermée pour un temps par un obturateur automatiquement décrochable), dans des conditions économiques particulièrement intéressantes. Une telle charge sera, par exemple, un véhicule aérien équipé d'un statoréacteur, que l'on pourra amener à la vitesse d'amorçage d'environ 500 m/s, à la suite d'une ressource effectuée à la fin d'un piqué de 15.000 mètres.

## Revendications

1. Procédé pour gonfler une montgolfière, caractérisé en ce qu'il consiste à utiliser à cet effet, de l'air chaud suffisamment humide pour qu'une condensation exothermique de la vapeur d'eau qu'il contient, puisse se produire, au cours de son ascension, au moins à partir d'une certaine altitude.

2. Procédé pour gonfler une montgolfière selon la revendication 1, caractérisé en ce que, au moment du décollage, la température du point de rosée de cet air est au moins égale à 294 Kelvins.

3. Procédé pour gonfler une montgolfière selon la revendication 1, caractérisé en ce que la température moyenne Tᵢ de l'air intérieur, nécessaire pour tenir en l'air, présente vis-à-vis de la température extérieure Tₑ, un rapport Tᵢ/Tₑ inférieur à 1,17.

4. Procédé pour gonfler une montgolfière selon la revendication 1, caractérisé en ce que la charge par unité de volume de la montgolfière complètement gonflée, est inférieure à 70 gr/m³.

5. Procédé pour gonfler une montgolfière selon la revendication 1, caractérisé en ce que, au moment du décollage,
- la température du point de rosée de l'air intérieur est notablement supérieure à 294 K;
- le ballon est incomplètement gonflé;
- l'ouverture du ballon est obturée d'une manière relativement étanche et est adaptée à le demeurer jusqu'à ce que le volume du ballon devienne constant et que la pression intérieure devienne un peu supérieure à la pression extérieure.

6. Montgolfière du genre comprenant un ballon (10) ouvert à la base et une charge (22), caractérisé en ce que, au moment du décollage,
- elle est incomplètement gonflée;
- l'air intérieur est saturé en vapeur d'eau à une température notablement supérieure à 294 K, ladite température étant d'autant plus élevée que le ballon est moins gonflé et que la charge par unité de volume est importante;
- l'ouverture du ballon (10) est fermée par un obturateur (24) adapté à se décrocher automatiquement lorsque l'écart de pression entre l'intérieur et l'extérieur excède un certain seuil.

7. Montgolfière du genre comprenant: un ballon (10) ouvert à sa base, une partie de paroi réalisée en un matériau transparent, des moyens de chauffage adaptés à exploiter le rayonnement solaire et une charge (22) accrochée au ballon;
- caractérisé en ce que:
- ladite partie de paroi transparente du ballon est la partie supérieure (16);
- ledit matériau est une pellicule plastique, à la fois transparente et absorbante pour le rayonnement solaire, avec un coefficient d'absorption d'environ vingt pour cent;
- un écran (44), adapté à absorber efficacement le rayonnement solaire, est disposé à l'intérieur du ballon (10).

8. Montgolfière selon la revendication 7, caractérisée en ce que, d'une part, le diamètre de l'ouverture pratiquée à la base du ballon (10) est suffisamment grand pour qu'une différence de pression faible soit maintenue entre l'air intérieur et l'air extérieur, lorsque le ballon gagne de l'altitude et en ce que, d'autre part, l'écran (44) comporte en son centre une ouverture (46), de diamètre proche de celui de l'ouverture du ballon.

9. Montgolfière selon la revendication 7, caractérisée en ce que, la partie supérieure (12) du ballon (10) étant sensiblement sphérique,
- des fixations (36-38) sont disposées à intervalles réguliers le long du grand cercle horizontal et le long de quelques autres grands cercles, écartés les uns des autres d'environ dix degrés;
- des attaches, adaptées à coopérer avec lesdites fixations, sont disposés à la périphérie de l'écran (44);
- une hélice (50), à axe orthoradial solidaire de l'arbre d'un moteur électrique (52), est fixée à la paroi extérieure du ballon, au voisinage de l'équateur, afin de pouvoir orienter l'écran (44) par rapport au soleil.

10. Montgolfière de très grande dimension selon les revendication 6 et 7, caractérisée en ce que la charge utile (22) est un véhicule aérien équipé d'un statoréacteur.
